Europäisches Patentamt

European Patent Office

Office européen des brevets

(19)

(11) Veröffentlichungsnummer: **0 128 526**
**A1**

(12) # EUROPÄISCHE PATENTANMELDUNG

(21) Anmeldenummer: **84106466.0**

(22) Anmeldetag: **06.06.84**

(51) Int. Cl.³: **B 63 B 35/72**, F 16 B 2/16

(30) Priorität: **08.06.83 IT 1254283**

(43) Veröffentlichungstag der Anmeldung: **19.12.84**
**Patentblatt 84/51**

(84) Benannte Vertragsstaaten: **AT BE CH DE FR GB LI NL**

(71) Anmelder: **G.S.D. Sports Equipments s.r.l., Via Molino Nuovo 55, I-16030 Avegno (Genova) (IT)**

(72) Erfinder: **Stradella, Giuseppe, Piazza San Giovanni Bono 39/12, 16036 Recco (Genova) (IT)**

(74) Vertreter: **Stapf, Otto F., Dipl.-Ing. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)**

(54) **Vorrichtung für Surf-Segelbretter zum Befestigen und Klemmen der Fussschlaufenbänder.**

(57) Eine Vorrichtung für Surf-Segelbretter zum Befestigen und Klemmen der Fußschlaufenbänder besitzt zur leichteren Einstellung und Auswechselbarkeit des Bandes zwei Klemmköpfe, die mit einem gewissen Abstand in das Deck (4) des Brettes versenkt montiert werden, sowie ein einziges Bandstück (14) zur Bildung eines Bogens unter den ein Fuß geschoben werden kann. Die Klemmköpfe besitzen, um eine gewisse Selbstsperrung der Bandenden ohne die Verwendung von Schrauben, Lochungen oder dergleichen zu erreichen, ein wannenartiges Gehäuse (1) mit inneren vorstehenden Rändern (5, 6), so daß zusammen mit dem um eine Rolle (13) gebogenen Bandende, ein mit inneren Rippen (11, 12) versehenes elastisches Element (7) bis zum selbsttätigen Einrasten eingeführt werden kann, wonach, sobald die Lage des Bandes (14) eingestellt ist, dasselbe durch einfaches Ziehen festgeklemmt wird.

BERG · STAPF · SCHWABE · SANDMAIR

PATENTANWÄLTE

MAUERKIRCHERSTRASSE 45   8000 MÜNCHEN 80

0128526

Anwaltsakte: 50 456 VI                    6. Juni 1984

'  G. S. D. SPORTS EQUIPMENTS          .
   s.r.l. (of Italian nationality)
   Via Molino Nuovo 55,

   16030 Avegno (Genova)
   ITALY

---

**Vorrichtung für Surf-Segelbretter zum Befestigen und Klemmen der Fußschlaufenbänder**

---

Die Erfindung bezieht sich auf eine Vorrichtung für Surf-Segelbretter zum Befestigen und Klemmen der Fußschlaufenbänder. Sie hat den Zweck, eine leichtere Einstellung der Bandlänge und Auswechselung des Bandes zu gestatten.

Es ist bekannt, daß heutzutage fast alle Surfbretter mit Schlaufen zum Halten der Füße ausgestattet sind. Durch diese Schlaufen bekommt man mehr Fahrsicherheit und das Windsurfing ist weniger ermüdend. Eine solche Vorrichtung muß verschiedenen Ansprüchen entsprechen, wie leichte Längeneinstellung des Bandes zur Anpassung an jede Fußgröße, sichere Befestigung der Bandenden, Fehlen jeglicher vorstehender Teile, die zu Verletzungen führen können, und Auswechselbarkeit des Bandes ohne Verwendung besonderer Werkzeuge. Bei jeder Lösung hat auch die wirtschaftliche Seite eine große Bedeutung, d.h, alle

☎ (089) 98 82 72 - 74   N.   Telex: 5 24 560 BERG d    Bankkonten: Bayer. Vereinsbank München 453 100 (BLZ 700 202 70)
Telegramme (cable)               Telekopierer: (089) 98 30 49    Hypo-Bank München 4410122850 (BLZ 700 200 11) Swift Code: HYPO DE MM
BERGSTAPFPATENT München              Kalle Infotec 6350 Gr. II + III    Postscheck München 653 43-808 (BLZ 700 100 80)

Bestandteile der Vorrichtung müssen so beschaffen sein, daß eine vorteilhafte industrielle Herstellung und damit niedrige Preise erzielt werden können.

Grundsätzlich müssen die Schalufen an der geeigneten Stelle einen Bogen über die Oberfläche des Decks des Surfbrettes bilden. Sie bestehen normalerweise aus einem Nylonband, das an den Enden mittels eventuell aufgerauhter Druckplättchen und Schrauben befestigt ist. Die Einstellung geschieht dadurch, daß das Band mit einer Reihe von Löchern für die Schrauben versehen wird, und daß durch Lösen, Verstellen der Bandlage und wieder Anziehen der Schrauben eine Einstellung erfolgt. Diese Schrauben werden in besondere blinde Dübel, die in das Deck des Brettes an den entsprechenden Stellen vorher versenkt eingesetzt und verklebt wurden, eingeschraubt und es ist wichtig, daß das System dicht ist, da das Eindringen von Wasser das Brett beschädigt. Üblicherweise wird das Nylonband der Schlaufe mit einem schlauchförmigen, weichen Überzug versehen, um Fußverletzungen zu vermeiden. Man kennt auch Fußschlaufen, die mit zwei "Welkro"-Material belegten Bandhälften hergestellt sind, wobei die Bildung der Schlaufe in der gewollten Länge durch entsprechendes Übereinanderlegen und Zusammenpressen der zwei Bandenden erzielt wird. Diese Lösung ist relativ einfach, erfordert aber ein öfteres Auswechseln der mit "Welkro" belegten Bandteile und das eventuelle Überziehen eines weichen, schlauchförmigen Polsterüberzuges zum Schutz der Füße wird erschwert. Man kennt weitere komplizierte Systeme, doch die heutige Surfbrett-Industrie erfordert eine Lösung, die unter jedem Gesichtspunkt befriedigt, um eine wirtschaftliche Produktion in großen Serien zu gestatten.

Die durch die vorliegende Erfindung vorgesehene Lösung befriedigt sämtliche Anforderungen, sowohl in wirtschaftlicher als auch praktischer Hinsicht. Sie besteht grundsätzlich in einer Fußschlaufe, die aus einem einzigen Bandstück aus geeignetem möglichst wasserabstoßendem und biegsamem Material besteht, welches an den zwei Enden durch das einfache Einlegen derselben je in besondere, in das Brettdeck versenkte und verklebte Klemmköpfe, die durch Zug am Band von selbst blockieren, befestigt wird. Die Klemmköpfe bestehen je aus einem wannenartigen, nur oben offenen versenkbaren Gehäuse, mit einem innen eingesetzten elastischen und profilierten Element sowie einer losen Rolle, über welche das Bandende gebogen und zurückgeführt wird, so daß, wenn das Band gezogen wird, dasselbe zusammen mit der Rolle zwischen den inneren zusammenlaufenden Wänden des elastischen Elementes und über einige Erhebungen geklemmt und fest blockiert wird.

In der Zeichnung ist beispielsweise eine bevorzugte Ausführungsform des Erfindungsgegenstandes dargestellt.

Fig. 1 zeigt eine zusammenfassende Perspektivansicht eines erfindungsgemäßen, in die Deckoberfläche eines Surfbrettes versenkten und verklebten Klemmkopfes mit teilweise sichtbarem geklemmtem Fußschlaufenband;

Fig. 2 zeigt etwa in natürlicher Größe eine Seitenansicht des gleichen ebenfalls in die Deckoberfläche eines Surfbrettes versenkten und verklebten Klemmkopfes mit geklemmtem Bandende;

Fig. 3 zeigt eine Draufsicht auf Fig. 2;

Fig. 4 zeigt den Schnitt A - A aus Fig.3 durch einen der beiden zu einer Fußschlaufe gehörenden Klemmköpfe, komplett mit innerem eingeschnapptem elastischem Element mit loser Rolle und losem Band vor dem Klemmvorgang;

Fig. 5 zeigt eine Seitenansicht eines einzelnen elastischen, in das wannenartige Gehäuse einsetzbaren und einschnappbaren Elementes mit dazugehörender losen Rolle.

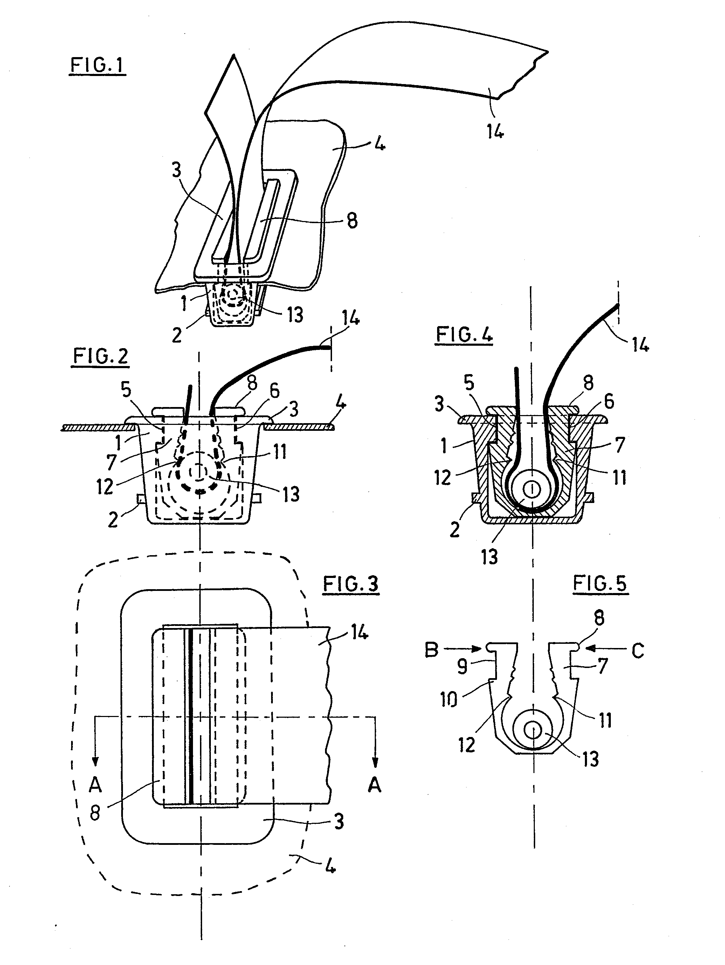

Jede Fußschlaufen-Vorrichtung gemäß der Erfindung umfaßt ein Paar Klemmköpfe mit aus einem einzigen Stück bestehendem Band. Nachfolgend wird der Einfachheit halber nur ein Klemmkopf beschrieben, da der andere gleich ist. Wie aus den Figuren 1 und 2 besonders hervorgeht, besitzt jeder aus Plastikmaterial gefertigte Klemmkopf ein wannenartiges, versenkbares Gehäuse 1, mit rechteckiger, leicht nach unten verjüngter Form und geschlossenem Boden. An den Längsseiten sind Erhebungen 2 zur besseren Verklebung und oben ein flaschartiger Rand 3 zur besseren Anlage des Kopfes vorgesehen wenn das Gehäuse in das teilweise dargestellte Deck 4 versenkt und verklebt wird. Die Innenseite des Gehäuses 1 besitzt senkrechte Wände, doch sind oben, den Längsseiten der oberen rechteckförmigen Öffnung entlang, zwei nach innen vorstehende Rippen 5, 6 vorgesehen, so daß genannte Wände beidseitig hinterschnitten sind. Die Rippen dienen dazu, wenn das Zusammensetzen erfolgt, das in den Fig. 4 und 5 besser sichtbare elastische Element 7 durch Einrasten zurückzuhalten. Dieses Element, aus geeignetem Plastikmaterial gefertigt, ist offen an den Seiten und zeigt einen U-förmigen Querschnitt, nebst zwei oberen Randwulsten 8 mit leicht abgerundeten geraden Kanten, sowie beidseitig eine Längsnut 9 zum Einrasten hinter den Rippen 5, 6 wenn das Element selbst in das Gehäuse 1 unter elastischer Verformung vollständig eingeführt wird. Nach unten sind die Nuten 9 durch eine Schulter 10 begrenzt, die hinter die Rippen 5, 6 einrasten kann. Der Boden des Elementes 7 besitzt einen halbrunden Querschnitt, während die Seitenwände, etwa auf halber Höhe, einige leicht vorstehende Längsrippen 11, 12 besitzen, welche die Aufgabe habe, mit der im unteren Teil des Elementes 7 lose eingesetzten Rolle 13 zusammenzuarbeiten. Genannter Boden besitzt,wie aus den Abbildungen 4, 5 hervorgeht, einen dünnen Querschnitt, damit die Elastizität gemäß den Pfeilen B, C, welche für die Einführung des Elementes 7 in das Gehäuse 1 notwendig ist, erhöht wird. Diese elastische Bewegung, besonders wenn das Element 7 aus dem Gehäuse 1 herausgezogen werden muß, kann durch das gleichzeitige Zusammendrücken der beiden Randwulste 8 erfolgen, so daß das Element 7 oben schmaler wird und aus seiner Wirklage herausgezogen werden kann.

Um das Festklemmen der beiden Enden des Bandes 14 vorzunehmen, wird einfach die Rolle 13 zwischen zwei Finger gefaßt, ein Bandende um die Rolle gebogen und das elastische Element 7 aufgezogen, wonach,durch Zusammendrücken der beiden Backen des Elementes, das Ganze in den Klemmkopf 1 geführt wird bis die Schultern 10 hinter die Rippen 5, 6 einrasten, während die Rolle 13 vorläufig innen lose bleibt. Das Band 14 kann somit vorläufig verschoben und wunschgemäß eingestellt werden. Sobald die richtige Lage erreicht ist, wird das Band nach oben gezogen, die Rolle 13 wird dabei angehoben und zusammen mit dem Band zwischen die Backen des elastischen Elementes 7 gezogen bis das Einschnappen über die Rippen 11, 12 erfolgt. Der Durchmesser der Rolle 13 ist natürlich so bemessen, daß die Rolle selbst zusammen mit dem Band 14 nicht aus der oberen Öffnung des Elementes 7 herausgehen kann und man erzielt deshalb eine äußerst sichere Klemmung, die um so größer wird, je stärker der Zug am Band 14 ist. Soll nach einer erfolgten Klemmung eine neue Einstellung des Bandes erfolgen, muß einfach die Rolle 13 mit einem beliebigen flachen Stück - eventuell auch einer Münze - nach unten gedrückt werden, so daß die Klemmung gelöst wird. Anschließend muß einfach der beschriebene Klemmvorgang wiederholt werden. Aus diesem Grunde ist es erfindungsgemäß vorgesehen, daß ein Ende des Bandes 14 mit einem schnallenartigen starren Endstück versehen werden kann, mit dessen Hilfe die Rolle 13 zur Lösung der Klemmung nach unten gedrückt werden kann.

Selbstverständlich kann die beschriebene Grund-Herstellungsart der Vorrichtung in den Einzelheiten geändert und verbessert werden ohne deshalb den Rahmen der Erfindung und deren Grundgedanke zu verlassen. In dieser Hinsicht wird bemerkt, daß zum Beispiel die Rolle 13 außen gerillt sein kann oder auch eine andere Form als zylindrisch erhalten kann, wie zum Beispiel oval oder ähnlich; ebenso können die vorstehenden Rippen 11, 12 im Inneren des elastischen Elementes 7 mehrere sein und eventuell mit verschiedenen ansteigenden Höhen.

BERG · STAPF · SCHWABE · SANDMAIR

PATENTANWÄLTE

MAUERKIRCHERSTRASSE 45  8000 MÜNCHEN 80

0128526

Anwaltsakte: 50 456 VI               6. Juni 1984


G. S. D. SPORTS EQUIPMENTS
s.r.l. (of Italian nationality)
Via Molino Nuovo 55,

16030 Avegno (Genova)
ITALY


Vorrichtung für Surf- Segelbretter zum Befestigen und Klemmen
der Fußschlaufenbänder


## Patentansprüche:

1. Vorrichtung für Surf-Segelbretter zum Befestigen und Klemmen von Fußschlaufenbändern, **dadurch gekennzeichnet,**
daß ein Paar Klemmköpfe vorgesehen ist, die in entsprechendem Abstand in das Deck des Surfbrettes versenkt montierbar sind,
daß ein biegsamer Bandbogen mit umgebogenen Enden vorgesehen ist, die je in einen der Klemmköpfe eingeführt sind,
daß die Klemmköpfe ein wannenartiges versenkbares Gehäuse (1) aus Plastikmaterial besitzen,
daß das Gehäuse (1) rechteckige Form, leicht geneigte Wände, einige äußere Verankerungsrippen (2) und flanschartige obere Ränder für eine sichere und dichte Verklebung auf das Deck (4) eines Surfbrettes aufweist,
daß das Gehäuse innen senkrechte Wände besitzt,
daß das Gehäuse längs der oberen Öffnung zwei seitliche vorstehende Rippen (5, 6) aufweist, hinter welche ein einzuführendes elastisches außen rechteckiges Element (7) einrasten kann,
daß das elastische Element aus Plastikmaterial hergestellt ist, einen U-förmigen Querschnitt besitzt und seitlich offen ist,

☎ (089) 98 82 72 - 74     N · Telex: 524560 BERG d        Bankkonten. Bayer. Vereinsbank München 453 100 (BLZ 700 202 70)
Telegramme (cable):        Telekopierer: (089) 98 30 49      Hypo-Bank München 4410 122 850 (BLZ 700 200 11) Swift Code: HYPO DE MM
BERGSTAPFPATENT München      Kalle Infotec 6350 Gr. II + III    Postscheck München 653 43-808 (BLZ 700 100 80)

daß das elastische Element (7) innen derart profiliert ist, daß eine lose Rolle (13), um welche das Schlaufenband (14) vorher gebogen wurde,eingeführt werden kann, daß das elastische Element (7) mit der Rolle und dem um diese geführten Schlaufenband durch die obere Öffnung in den Klemmkopf eingedrückt werden kann,wobei das Element (7) mittels seiner Nuten (9) einrasten kann, und daß das Band (14), wenn daran gezogen wird, in Zusammenwirkung mit der Rolle (13) festgeklemmt wird.

2. Vorrichtung nach Anspruch 1, dadurch gekennzeichnet, daß das elastische Element (7) innen an jeder der beiden Längswände eine Längsnut (9) besitzt, die auf vorstehende Rippen (5, 6) des Gehäuses aufgerastet wird wenn das Element selbst zusammen mit dem um die Rolle (13) umgebogenen Band in das Gehäuse des Klemmkopfes eingeführt wird.

3. Vorrichtung nach Anspruch 1 oder 2, dadurch gekennzeichnet, daß das elastische Element (7) oben zwei wulstartige vorstehende Längsränder (8) mit als Griff abgerundeten Kanten besitzt.

4. Vorrichtung gemäß einem der Ansprüche 1 bis 3, dadurch gekennzeichnet, daß das elastische Element (7) einen unteren Boden mit dünnerem Querschnitt und in mittlerer Höhe einige vorstehende Rippen (11) zum festhalten der Rolle (13) und des um diese gelegten Bandes (14) aufweist.

5. Vorrichtung nach einem der Ansprüche 1 bis 4, dadurch gekennzeichnet, daß das Band (14) an einem der beiden Enden schnallenartig befestigt ein flaches starres Endstück aufweist, mit dessen Hilfe zum Lösen der Klemmung die Rolle (13) nach unten gedrückt werden kann.

FIG.1

FIG.2

FIG.3

FIG.4

FIG.5

0128526

0128526

Nummer der Anmeldung

## Europäisches Patentamt
## EUROPÄISCHER RECHERCHENBERICHT

EP  84 10 6466

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | NL-A-8 100 722  (VAN DER STIGHEL)<br>* Seite 3, Zeile 25 - Seite 4, Zeile 10; Seite 4, Zeilen 17-25; Figuren 1,2,5 *<br><br>--- | 1 | B 63 B  35/72<br>F 16 B   2/16 |
| A | GB-A-1 025 811  (MARSHALL)<br>* Seite 1, Zeile 52 - Seite 2, Zeile 22; Figuren 1,2 *<br><br>----- | 1 | |

| RECHERCHIERTE SACHGEBIETE (Int. Cl. ³) |
|---|
| B 63 B<br>F 16 B<br>A 63 C |

Der vorliegende Recherchenbericht wurde für alle Patentansprüche erstellt.

| Recherchenort<br>DEN HAAG | Abschlußdatum der Recherche<br>22-08-1984 | Prüfer<br>VOLLERING J.P.G. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument